# EUROPÄISCHE PATENTANMELDUNG

(11) **EP 3 786 483 A2**
(43) Veröffentlichungstag der Anmeldung: **03.03.2021**
(21) Anmeldenummer: 20190099.0
(22) Anmeldetag: 07.08.2020
(51) Int. Cl.: F16H 55/17, F16H 7/02, F16H 7/18

(54) **ZAHNSCHEIBE MIT FÜHRUNGSELEMENTEN**

(30) Priorität: 30.08.2019 DE 102019213105
(71) Anmelder: ContiTech Antriebssysteme GmbH, 30165 Hannover (DE)
(72) Erfinder: Lorenz, Eduard, 30419 Hannover (DE); Wurmbäck, Christian, 30419 Hannover (DE)
(74) Vertreter: Continental Corporation

(57) **Zusammenfassung**

Zahnscheibe eines Zahnriementriebs, bei dem ein Zahnriemen aus elastomerem Material mit seiner verzahnten Antriebsseite die Zahnscheibe umlaufend umschlingt und die Verzahnungen von Zahnscheibe und Zahnriemen kämmend ineinandergreifen, wobei die Zahnscheibe mit ein- oder beidseitig angeordneten Führungselementen für den Zahnriemen versehen ist, wobei die Führungselemente als eine Vielzahl von Führungsflanschen ausgebildet sind, die über den Umfang der Zahnscheibe verteilt angeordnet und über jeweils einen Teilumfang der Zahnscheibe ausgebildet sind, wobei die Führungsflansche mindestens einen der Zahnzwischenräume über mindestens einen Teilbereich der Zahnhöhe seitlich begrenzen.

## Beschreibung

Die Erfindung betrifft eine Zahnscheibe eines Zahnriementriebs, bei dem ein Zahnriemen aus elastomerem Material mit seiner verzahnten Antriebsseite die Zahnscheibe umlaufend umschlingt und die Verzahnungen von Zahnscheibe und Zahnriemen kämmend ineinandergreifen, wobei die Zahnscheibe mit ein- oder beidseitig angeordneten Führungselementen für den Zahnriemen versehen ist. Ebenfalls ist ein Zahnriemenantrieb eines Zweirades mit einer solchen Zahnscheibe offenbart.

Zahnriemen können wesentlich höhere Drehmomente als vergleichbare Flach- der Keilriemen übertragen, müssen aber in aller Regel durch Führungselemente, oft ausgebildet als ringförmige, seitlich an der Zahnscheibe befestigte Kränze, so genannte Bordscheiben, gegen ein durch Querkräfte verursachtes Ablaufen von den Zahnscheiben gesichert werden. Dies ist insbesondere bei Schrägverzahnungen der Fall, die zwar ein weicheres und geräuschärmeres Laufverhalten zeigen als Geradverzahnungen, die aber eben durch die inhärente Axialkraftkomponente zum Ablaufen von Riemenscheiben neigen können. Aber auch bei geradverzahnten Zahnriementrieben sind Sicherungen gegen Ablaufen durch Querkräfte wichtig, so beispielsweise bei Zahnradantrieben von Zweirädern.

Die DE 69108096 T2 offenbart hierzu ringförmige Kränze als Bordscheiben, die durch radiale Pressung auf den Oberflächen der Zahnscheibenzähne befestigt werden.

Die DE 10 2005 018 581 A1 offenbart eine als flache Blechscheibe mit einer Innenverzahnung ausgebildete Bordscheibe, die auf eine Schulter der Zahnriemenscheibe aufgepresst ist.

Die Verwendung von separaten Bordscheiben weist einerseits Nachteile bei der Montage auf, da mehrere Einzelteile in richtiger Zusammensetzung zusammengebaut werden müssen, und zeigt andererseits je nach Werkstoffpaarung eine gewisse Anfälligkeit in Bezug auf Spaltkorrosion bei Einsatz in rauen, feuchten Umgebungen. Demgegenüber ist die Herstellung von Zahnriemenscheiben mit integrierten Führungsringen oder -profilen, welche separate Bordscheiben ersetzen könnten, relativ aufwendig.

Eine andere Möglichkeit zur Führung von Zahnriemen ist die so genannte Mittenführung. Dabei sind Führungsprofile im Verzahnungsbereich vorgesehen. Die EP 2 289 792 A1 zeigt hierzu ein selbstzentrierendes System, bei dem der Riemen mit einer Vertiefung oder Nut in der Mitte seiner Verzahnung ausgebildet ist und die Zahnriemenscheibe einen mittig zwischen den Zahnflanken verlaufenden, vorspringenden Zentrierungssteg oder -flansch aufweist, der beim Umlauf in die Nut des Zahnriemens eingreift.

Ein ähnliches System offenbart die US 2018 003273 A1, bei der ebenfalls zwischen den Zahnflanken der Riemenscheibe eine ansteigende Finne zum Eingriff in eine in der Riemenverzahnung ausgebildete Nut vorgesehen ist.

Die Herstellung solcher Verzahnungen mit Mittenführung ist allerdings sehr aufwendig, sowohl beim Herstellen des Zahnriemens als auch und insbesondere bei der Herstellung des Zahnprofils der Zahnriemenscheibe.

Für die Erfindung bestand daher die Aufgabe, eine Zahnscheibe eines Zahnriementriebs bereitzustellen, die eine sichere Führung des Zahnriemens erlaubt und ein Ablaufen auch bei Schrägverzahnungen verhindert, die einfach herzustellen ist, bei der ein einfacher, herkömmlicher Zahnriemen aus elastomerem Material einsetzbar ist, und die keine Schwierigkeiten bei einer Montage bereitet.

Gelöst wird diese Aufgabe durch die Merkmale des Hauptanspruchs. Weitere vorteilhafte Ausbildungen sind in den Unteransprüchen offenbart.

Dabei sind die ein- oder beidseitig angeordneten Führungselemente der Zahnscheibe als eine Vielzahl von Führungsflanschen ausgebildet, die über den Umfang der Zahnscheibe verteilt angeordnet und über jeweils einen Teilumfang der Zahnscheibe ausgebildet sind, wobei die Führungsflansche jeweils mindestens einen der Zahnzwischenräume über mindestens einen Teilbereich der Zahnhöhe seitlich begrenzen. Durch eine solche Ausbildung kann man auf die Verwendung von Bordscheiben verzichten und trotzdem auf eine sehr effektive Weise eine Zwangsführung des Zahnriemens erreichen. Dabei ist die Ausbildung von Führungsflanschen lediglich über Teile des Umfangs der Zahnscheibe völlig ausreichend.

Das wird insbesondere durch eine vorteilhafte Weiterbildung unterstützt, die darin besteht, dass, die Führungsflansche beidseitig abwechselnd mindestens einen der Zahnzwischenräume begrenzen. Hierdurch erreicht man nicht nur eine beidseitige sichere Führung des Zahnriemens, sondern verringert auch die Erwärmung des Riemens, die beispielsweise durch ständiges Anlaufen oder Reiben der Riemenseitenbereiche an einer Bordscheibe entstehen könnte.

Eine weitere vorteilhafte Ausbildung besteht darin, dass die Führungsflansche in der durch die Zahnseitenflächen aufgespannten Ebene angeordnet sind, also direkt an der Seite des Zahnscheibenprofils wirken, so dass eine Lose oder ein Hin- und Herwandern des Riemens vermieden wird. Ebenfalls ist es ausreichend und leicht herstellbar, dass die Führungsflansche als Ringsegmente ausgebildet sind, die jeweils einen Zahnzwischenraum über etwa die Zahnhöhe überdecken und begrenzen.

Eine weitere vorteilhafte Ausbildung besteht darin, dass die Führungsflansche einstückig mit der Zahnscheibe ausgebildet sind. Bei einer solchen Ausführung erübrigt sich jegliche Art der Montage, da die Zahnscheibe beispielsweise durch spanende Bearbeitung, beispielsweise durch Fräsen, oder auch durch formgebende Verfahren wie etwa Druck-Guss-Verfahren bereits vollständig und einbaufertig hergestellt werden kann.

Eine weitere vorteilhafte Ausbildung besteht darin, dass die Führungsflansche stoffschlüssig oder formschlüssig mit der Zahnscheibe verbunden sind. Dabei können die Führungselemente beispielsweise durch Kleben oder durch Press- oder Klemmverfahren kalt aufgebracht werden. Natürlich sind hier auch verschiedenste Schweißverfahren möglich, je nach Werkstoffkonstellation.

Eine weitere vorteilhafte Ausbildung besteht darin, dass die Zahnscheibe an ihrem Zahngrund über einen Teil der Zahnbreite zum Inneren der Zahnscheibe weisende Öffnungen zur Abfuhr von Fremdkörpern oder Verschmutzungen zwischen den Zähnen vorgesehen sind.

Zahnriemen können zwar wesentlich höhere Drehmomente als vergleichbare Flach- der Keilriemen übertragen, sind aber auch anfällig gegenüber Störungen des Zahneingriffs durch Verschmutzungen, Bei einem geschlossenem Zahnprofil können die Zähne des Antriebsriemens zwar optimal an der Zahnriemenscheibe anliegen, es können sich jedoch im Zahnprofil Fremdkörper ansammeln. Dies kann den Kontakt zwischen dem Riemen bzw. dessen Zähnen und der Zahnriemenscheibe beeinträchtigen und insbesondere die Tiefe des Profils der Zahnriemenscheibe derart verringern, dass es zu einem Überspringen des Riemens gegenüber der Zahnriemenscheibe kommen kann. Das kann durch die genannten Öffnungen sicher vermieden werden.

Eine weitere vorteilhafte Ausbildung besteht darin, dass die Zahnscheibe einen Zahnscheibenkörper oder -steg aufweist, von dem die Zähne der Zahnscheibe ein- oder beidseitig auskragend ausgebildet sind, so dass die Zahnscheibenzähne am Zahnfuß lediglich über einen Teil der Zahnbreite mit dem Zahnscheibenkörper oder -steg verbunden sind. Neben der dadurch erreichbaren Gewichtsersparnis lässt sich angepasst an die jeweilige Belastungssituation und Leistungsübertragung einerseits eine ausreichende Abstützung und Momentenübertragung durch den Zahnriemen erreichen und andererseits eine sichere und saubere Abfuhr von Verschmutzungen, da sich durch die Auskragung entsprechend große Öffnungen im Zahnfußbereich bilden.

Eine weitere vorteilhafte Ausbildung besteht darin, dass die Zahnscheibe in Bezug auf ihre Zenitebene zweigeteilt ausgebildet ist. Damit vereinfacht sich die Herstellung der Zahnscheibe dadurch, dass zwei ähnliche oder gleiche Teile hergestellt werden, die man dann nur noch zu einer Zahnscheibe zusammenführen muss. Das ist besonders dann vorteilhaft, wenn eine solche Zahnscheibe so ausgebildet ist, dass von einem Zahnscheibenkörper oder -steg die Zähne der Zahnscheibe beidseitig auskragen. Die Zahnscheibe besteht dabei aus zwei bezüglich ihrer Zenitebene symmetrischen Halbscheiben besteht, welche lediglich um einen Winkel verdreht zu einer Zahnscheibe so montiert / zusammengesetzt sind, dass die Führungsflansche beidseitig abwechselnd mindestens einen der Zahnzwischenräume begrenzen.

Besonders geeignet ist eine solche Zahnscheibe in einem Zahnriemenantrieb eines Zweirades, da hier der Antrieb oft ungeschützt in staubigen oder schmutzigen Umgebungen laufen muss. Die erfindungsgemäße Ausführung stellt dann eine sichere Riemenführung bereit sowie eine ausreichende Leistungsübertragung auch bei Verschmutzungen.

Anhand eines Ausführungsbeispiels soll die Erfindung näher erläutert werden. Es zeigen
- Fig. 1: eine erfindungsgemäße Zahnscheibe,
- Fig. 2: eine perspektivische Darstellung einer Teilansicht der erfindungsgemäßen Zahnscheibe gemäß Fig. 1
- Fig. 3: eine Seiten-Teilansicht der erfindungsgemäßen Zahnscheibe gemäß Fig. 1
- Fig. 4: eine perspektivische Zusammenstellung des die erfindungsgemäße Zahnriemenscheibe umlaufenden Zahnriemens.

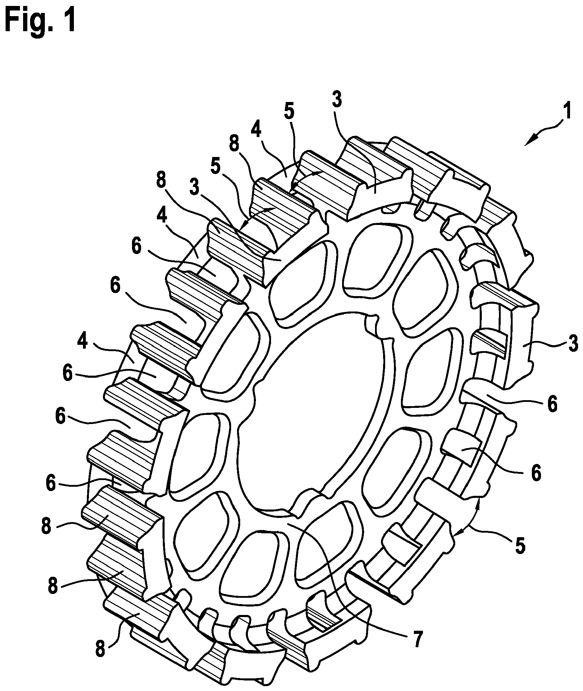

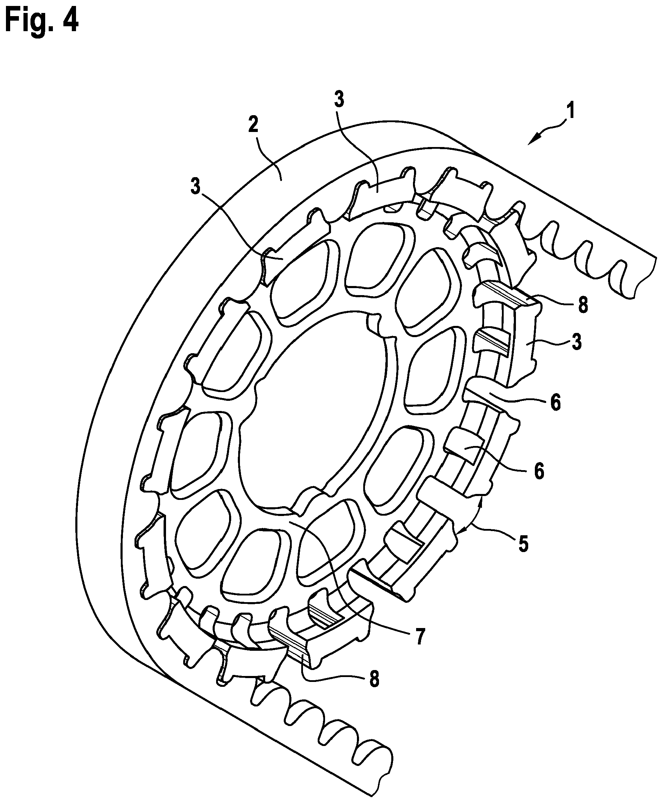

Fig. 1 zeigt schematisch und in einer perspektivischen Darstellung eine erfindungsgemäße Zahnscheibe 1 eines Zahnriementriebs. Zur Verdeutlichung der Merkmale der Zahnscheibe ist der zugehörige Zahnriemen 2 in der Fig.1 nicht dargestellt. Eine perspektivische Zusammenstellung des die Zahnriemenscheibe 1 umlaufenden Zahnriemens 2 ist in der Fig. 4 zu finden, in der deutlich wird, dass der Zahnriemen 2 aus elastomerem Material mit seiner verzahnten Antriebsseite die Zahnscheibe 1 umlaufend umschlingt und die Verzahnungen von Zahnscheibe 1 und Zahnriemen 2 kämmend ineinandergreifen.

Die Zahnscheibe 1 ist in dieser Ausführung mit beidseitig angeordneten Führungselementen für den Zahnriemen 2 versehen. Wie in Fig. 1 dargestellt, sind die Führungselemente als eine Vielzahl von Führungsflanschen 3, 4 ausgebildet, die über den Umfang der Zahnscheibe 1 verteilt angeordnet und über jeweils einen Teilumfang der Zahnscheibe ausgebildet sind. Die die Führungsflansche 3 und 4 begrenzen beidseitig abwechselnd jeweils einen Zahnzwischenraum 5 seitlich über etwa die Zahnhöhe.

Die Führungsflansche 3 und 4 sind dabei in der durch die Zahnseitenflächen aufgespannten Ebene angeordnet und einstückig mit der Zahnscheibe ausgebildet, nämlich in dieser Ausführung stoffschlüssig mit der Zahnscheibe 2 verbunden, wobei Letztere aus einem Stück durch ein automatisch gesteuertes Fräsverfahren hergestellt ist.

Die Zahnscheibe 2 besitzt an ihrem Zahngrund über einen Teil der Zahnbreite zum Inneren der Zahnscheibe weisende Öffnungen 6, nämlich zur Abfuhr von Fremdkörpern oder Verschmutzungen zwischen den Zähnen 8. Die Zahnscheibe 1 weist einen Zahnscheibenkörper 7 auf, von dem die Zähne 8 der Zahnscheibe 1 beidseitig auskragend ausgebildet sind. Die Öffnungen 6 sind somit über die gesamte Länge der Auskragung ausgebildet.

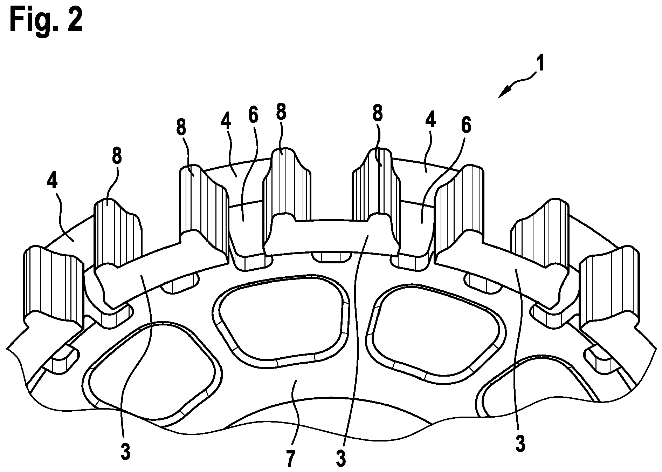

Fig. 2 zeigt noch einmal schematisch eine perspektivische Darstellung einer Teilansicht der erfindungsgemäßen Zahnscheibe 1 gemäß Fig. 1.

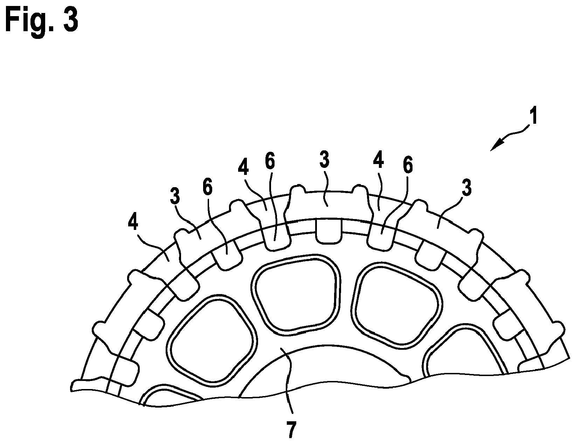

Fig. 3 zeigt eine/ Teilansicht der erfindungsgemäßen Zahnscheibe 1 gemäß Fig. 1 von der Seite. Deutlich erkennbar sind in beiden Figuren die Führungsflansche 3 und 4, der Zahnscheibenkörper 7, sowie die Öffnungen 6 zwischen den auskragenden Zahnscheibenzähnen. Erkennbar ist auch, dass die Führungsflansche 3 und 4 als Ringsegmente ausgebildet sind, die jeweils einen Zahnzwischenraum über maximal die Zahnhöhe überdecken und begrenzen.

### Bezugszeichenliste

- 1: Zahnscheibe
- 2: Zahnriemen
- 3: Führungsflansch
- 4: Führungsflansch
- 5: Zahnzwischenraum
- 6: Öffnung
- 7: Zahnscheibenkörper
- 8: Zahnscheibenzahn

## Patentansprüche

1. Zahnscheibe (1) eines Zahnriementriebs, bei dem ein Zahnriemen (2) aus elastomerem Material mit seiner verzahnten Antriebsseite die Zahnscheibe (1) umlaufend umschlingt und die Verzahnungen von Zahnscheibe und Zahnriemen kämmend ineinandergreifen, wobei die Zahnscheibe (1) mit ein- oder beidseitig angeordneten Führungselementen für den Zahnriemen versehen ist, **dadurch gekennzeichnet, dass** die Führungselemente als eine Vielzahl von Führungsflanschen (3, 4) ausgebildet sind, die über den Umfang der Zahnscheibe (1) verteilt angeordnet und über jeweils einen Teilumfang der Zahnscheibe ausgebildet sind, wobei die Führungsflansche (3, 4) jeweils mindestens einen der Zahnzwischenräume (5) über mindestens einen Teilbereich der Zahnhöhe seitlich begrenzen.

2. Zahnscheibe nach Anspruch 1, bei der die Führungsflansche (3, 4) beidseitig abwechselnd mindestens einen der Zahnzwischenräume (5) begrenzen.

3. Zahnscheibe nach Anspruch 1 oder 2, bei der die Führungsflansche (3, 4) in der durch die Zahnseitenflächen aufgespannten Ebene angeordnet und als Ringsegmente ausgebildet sind, die jeweils mindestens einen Zahnzwischenraum über maximal die Zahnhöhe überdecken und begrenzen.

4. Zahnscheibe nach einem der Ansprüche 1 bis 3, bei der die Führungsflansche (3, 4) einstückig mit der Zahnscheibe ausgebildet sind.

5. Zahnscheibe nach einem der Ansprüche 1 bis 3, bei der die Führungsflansche (3, 4) stoffschlüssig oder formschlüssig mit der Zahnscheibe verbunden sind.

6. Zahnscheibe nach einem der Ansprüche 1 bis 5, bei der an ihrem Zahngrund über einen Teil der Zahnbreite zum Inneren der Zahnscheibe weisende Öffnungen (6) zur Abfuhr von Fremdkörpern oder Verschmutzungen zwischen den Zähnen (8) vorgesehen sind.

7. Zahnscheibe nach einem der Ansprüche 1 bis 6, aufweisend einen Zahnscheibenkörper oder -steg (7), von dem die Zähne (8) der Zahnscheibe (1) ein- oder beidseitig auskragend ausgebildet sind.

8. Zahnscheibe nach einem der Ansprüche 1 bis 7, wobei die Zahnscheibe in Bezug auf ihre Zenitebene zweigeteilt ausgebildet ist.

9. Zahnscheibe nach Anspruch 8, ausgebildet mit einem Zahnscheibenkörper oder -steg, von dem die Zähne der Zahnscheibe beidseitig auskragen, **dadurch gekennzeichnet, dass** die Zahnscheibe aus zwei bezüglich ihrer Zenitebene symmetrischen Halbscheiben besteht, welche um einen Winkel verdreht zu einer Zahnscheibe so zusammengesetzt sind, dass die Führungsflansche beidseitig abwechselnd mindestens einen der Zahnzwischenräume begrenzen.

10. Zahnriemenantrieb eines Zweirades mit einer Zahnscheibe nach einem der Ansprüche 1 bis 9.
